# EUROPÄISCHE PATENTSCHRIFT

(11) **EP 0 785 383 B1**
(45) Veröffentlichungstag und Bekanntmachung des Hinweises auf die Patenterteilung: **03.03.1999**
(21) Anmeldenummer: 96119933.8
(22) Anmeldetag: 12.12.1996
(51) Int. Cl.: F16J 15/00, F16J 15/40, F04D 29/12

(54) **Dichtungsanordnung**
Sealing arrangement
Dispositif d'étanchéité

(30) Priorität: 17.01.1996 DE 29600707 U
(43) Veröffentlichungstag der Anmeldung: 23.07.1997
(73) Patentinhaber: FEODOR BURGMANN DICHTUNGSWERKE GmbH & Co., D-82515 Wolfratshausen (DE)
(72) Erfinder: Nosowicz, Josef Dr., 82538 Geretsried (DE); Riedl, Michael, 82547 Eurasburg (DE); Kollinger, Rudolf, 82549 Königsdorf (DE)
(74) Vertreter: Schmidt, Horst, Dr.

(56) Entgegenhaltungen:
- EP-A- 0 386 315
- US-A- 4 502 693
- US-A- 5 427 500

## Beschreibung

Die Erfindung betrifft eine Dichtungsanordnung zur Abdichtung einer Welle gegenüber einem eine abzudichtende Flüssigkeit enthaltenden Gehäuse gemäss Oberbegriff des Patentanspruchs 1. Eine solche Dichtungsanordnung ist z. B. aus US-A- 5 427 500 bekannt.

Die Erfindung bezieht sich insbesondere auf sog. sperr- oder puffergasgeschmierte Gleitringdichtungen, wie sie z.B. für die Abdichtung der Antriebswellen der Pumpenlaufräder von Kreiselpumpen zur Förderung eines flüssigen Mediums eingesetzt werden. Das Sperrgas stellt zusätzlich zur Gleitringdichtung eine Abdichtungsmittel zur Vermeidung eines Austrittes der Flüssigkeit an die Umgebung dar, indem das Sperrgas unter einem höheren Druck als der der abzudichtenden Flüssigkeit gehalten wird und auf diese Weise eine Leckage der Flüssigkeit in den sperrgasbeaufschlagten Bereich der Dichtungsanordnung verhindert. Andererseits kann bei manchen Anwendungsfällen selbst eine sehr geringe Gasleckage längs der Gleitringdichtung in einen flüssigkeitsbeaufschlagten Bereich nicht hingenommen werden, da eine Vermischung der Flüssigkeit mit dem Gas zu Beeinträchtigungen bei der weiteren Verwendung oder Verarbeitung der Flüssigkeit führen kann.

Aufgabe der Erfindung ist es, eine Dichtungsanordnung der eingangs erwähnten Gattung dahingehend zu verbessern, dass eine Beeinträchtigung einer Sperrgasleckage auf die abzudichtende Flüssigkeit vermieden wird. Zur Lösung dieser Aufgabe wird auf den Patentanspruch 1 verwiesen. Danach ist der sperrgasbeaufschlagten Gleitringdichtung flüssigkeitsseitig eine Auffangkammer zum Aufnehmen und Auffangen der an den flüssigkeitseitigen Bereich der Gleitringdichtung gelangten Gasleckage vorgeschaltet. Diese Einrichtung kann gemäss einer bevorzugten Ausgestaltung der Erfindung eine sich zur Welle hin öffnende, in radialem Abstand zur Welle angeordnete Ringnut nahe der Gleitringdichtung umfassen, in der sich die Gasleckage unter Auftriebswirkung und Einwirkung einer von der Sekundärpumpeinrichtung erzwungenen Teilströmung der abzudichtenden Flüssigkeit in Richtung auf die Auffangkammer ansammeln kann. Von der Auffangkammer kann das angesammelte Gemisch aus Flüssigkeit und Gasleckage nach aussen zur Abscheidung der flüssigen Phase von der gasförmigen Phase geleitet werden, wobei die flüssige Phase in den Behandlungsprozess zurückgeführt werden kann. Die Erfindung ermöglicht damit den vorteilhaften Einsatz gasgeschmierter Gleitringdichtungen auch bei solchen Anwendungsfällen, bei denen es zu Prozesstörungen kommen kann, wenn das Sperrgas dauerhaft in der abzudichtenden Flüssigkeit dispergiert werden würde, wie es bei einer Anordnung gemäss der US-A-5427500 der Fall ist, bei der Luft als Sperrgas gezielt in das abzudichtende flüssige Medium (Schlamm) über eine Einwegdichtung in grosser Menge eingeführt werden kann. Im übrigen wird auf die Patentansprüche verwiesen.

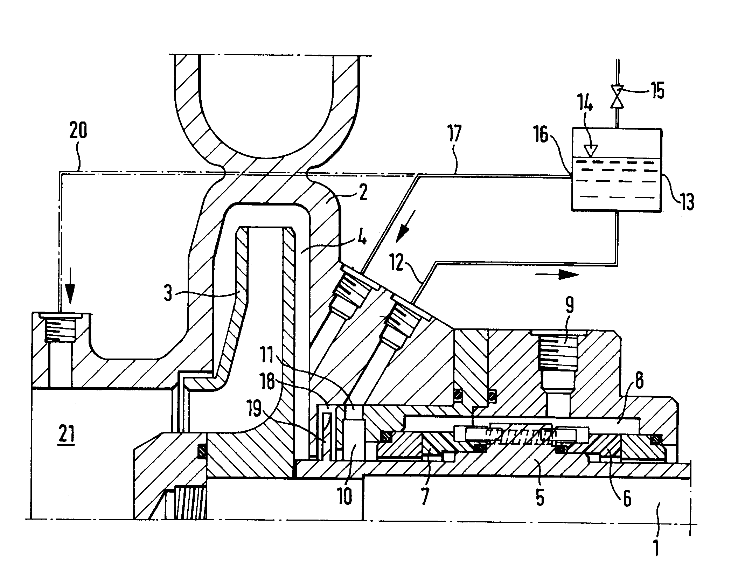

Die Erfindung wird nachfolgend anhand einer Ausführungsform und der Zeichnung näher erläutert. Die Zeichnung zeigt in längsgeschnittener Ansicht eine erfindungsgemäss aufgebaute Abdichtungsanordnung beim Einsatz in einer Kreiselpumpe.

Obschon die Erfindung nachfolgend in Verbindung mit einer Kreiselpumpe zur Abdichtung der Antriebswelle 1 eines Pumpenlaufrades 3 gegenüber einem Pumpengehäuse 2 beschrieben wird, versteht es sich, dass sie auf dieses Anwendungsgebiet nicht beschränkt ist, sondern auch bei anderen Gerätschaften, wie Rührwerken oder dgl., eingesetzt werden kann, bei denen es darauf ankommt, zu vermeiden, dass sich die Leckage einer sperrgasgeschmierten Gleitringdichtungsanordnung mit dem abzudichtenden flüssigen Medium vermischen kann.

Die Gleitringdichtungsanordnung, die das allgemeine Bezugszeichen 5 trägt, umfasst ein Paar in axialem Abstand längs der Welle 1 angeordnete Gleitringpaarungen 6, 7, die jeweils einen mit der Welle 1 sich drehenden Gleitring und einen drehunbeweglich gegenüber dem Pumpengehäuse 2 gehaltenen Gleitring aufweisen. Die radialen Dichtflächen der zusammenwirkenden Gleitringe bilden zwischen sich bei Betrieb einen Dichtspalt, um eine im Pumpengehäuse 2 zwischen den Gleitringpaarungen 6, 7 definierte Dichtungskammer 8 gegenüber dem Pumpenraum 4 des Pumpengehäuses 2 einerseits und gegenüber der Aussenumgebung andererseits abzudichten. Die Dichtungskammer 8 steht mit einer Einlassöffnung 9 in Verbindung, über die ein geeignetes Sperrgas, z.B. N_{2,} von einer nicht gezeigten Sperrgasquelle in die Dichtungskammer 8 eingeführt werden kann. Das Sperrgas steht unter einem Druck, der gleich oder vorzugsweise etwas höher als der Druck der abzudichtenden Flüssigkeit im Pumpenraum 4 ist.

Förderwirksame Nuten in den Dichtflächen der Gleitringe können vorgesehen sein, um das Sperrgas zwangsweise zwischen die Dichtflächen der Gleitringe bei Drehung der Welle 1 zu pumpen und damit die Dichtflächen unter Bildung eines Dichtspaltes ausser Berührung miteinander zu bringen. Die Gleitringe der Gleitringpaarungen 6, 7 sind ausserdem durch eine nicht gezeigte Vorspanneinrichtung gegeneinander vorgespannt, so dass die Dichtflächen bei Stillstand der Welle 1 in abdichtender Berührung miteinander gehalten werden.

Obschon bei der gezeigten Ausführungsform der Erfindung die Dichtungskammer 8 sowohl atmosphären- als auch flüssigkeitseitig mittels je einer Gleitringpaarung 6, 7 abgedichtet ist, könnte atmospärenseitig auch eine andere geeignete Dichtungseinrichtung, z.B. eine Dichtungspackung oder dgl. vorgesehen sein. Auch könnte die atmospärenseitige Dichtungseinrichtung in Gestalt eines Spalttopfes einer magnetischen Kraftübertragungseinrichtung für den Antrieb der Welle 1 ausgebildet sein.

Der vorbeschriebene Aufbau einer sperrgasgeschmierten Dichtungsanordnung ist im übrigen dem Fachmann grundsätzlich bekannt und braucht daher hier nicht näher erläutert zu werden.

Erfindungsgemäss ist der flüssigkeitseitigen Gleitringpaarung 7 eine Anordnung vorgeschaltet, die eine Leckage des Sperrgases in den Pumpenraum 4 abfangen kann, bevor eine Vermischung der Sperrgasleckage mit der abzudichtenden Flüssigkeit stattfindet. Zu diesem Zweck ist nahe der Gleitringpaarung 7 in einem von der abzudichtenden Flüssigkeit beaufschlagten Bereich eine ringnutförmige Auffangkammer oder Ausnehmung 10 im Pumpengehäuse 2 oder einem feststehenden Gehäuseteil (nicht näher bezeichnet) der Dichtungsanordnung ausgebildet, die die Welle 1 mit einem geeigneten radialen Abstand umgibt. Die Auffangkammer 10 öffnet sich zur Welle 1 hin und weist in ihrer radial am weitesten von der Welle 1 entfernten Endumfangswand eine Öffnung 11 auf, die mit einer Leitung 12 in Verbindung steht, durch die die Auffangkammer 10 mit einem Abscheidebehälter 13 ausserhalb des Pumpengehäuses 2 verbunden ist.

Ferner ist nahe der Auffangkammer 10 eine das allgemeine Bezugszeichen 18 tragende Sekundärpumpeinrichtung vorgesehen. Die Sekundärpumpeinrichtung 18 umfasst ein scheibenförmiges Pumpelement 19, das drehfest mit der Welle 1 verbunden ist und in einer ringnutförmigen (nicht näher bezeichneten) Ausnehmung rotiert, die durch benachbarte axial beabstandete Stirnflächen eines die Welle 1 mit radialem Abstand umgebenden Bereiches des Pumpengehäuses 2 bzw. eines ebensolchen Bereiches des feststehenden Gehäuseteiles der Dichtungsanordnung begrenzt ist, so dass das scheibenförmige Pumpelement 19 zusammen mit der Ausnehmung einen im wesentlichen U-förmigen Strömungsweg für die Flüssigkeit schafft, längs dem die Flüssigkeit aus dem Pumpenraum 4 in den Bereich der Auffangkammer 10 strömen kann. Das Pumpelement 19 bewirkt, dass bei Drehung der Welle 1 eine Strömung der abzudichtenden Flüssigkeit in Richtung auf die Auffangkammer 10 bzw. auf die flüssigkeitseitige Gleitringpaarung 7 erzwungen und damit eine eventuelle Gasleckage längs der flüssigkeitseitigen Gleitringpaarung 7 durch die aufgezwungene Strömung der abzudichtenden Flüssigkeit in die Auffangkammer 10 verdrängt wird, um von dort in den Abscheidebehälter 13 abgeführt werden zu können.

Bei Stillstand der Welle 1 wird sich die Gasleckage der Gleitringpaarung 7 dagegen auch ohne Pumpwirkung alleine durch Auftriebswirkung in der Auffangkammer 10 ansammeln.

Der Abscheidebehälter 13 ist mit der abzudichtenden Flüssigkeit bis zu einer geeigneten Füllstandshöhe gefüllt. Die aus der Auffangkammer 10 abgeleitete Gasleckage wird bodenseitig in den Abscheidebehälter 13 eingeführt und steigt im Abscheidebehälter 13 nach oben bis oberhalb der Füllstandshöhe der Flüssigkeit. Ein Füllstandssensor 14 ist vorgesehen, um die Füllstandshöhe im Abscheidebehälter 13 zu erfassen und ein Signal zu liefern, wenn die Füllstandhöhe unterhalb eines bei 16 angedeuteten Niveaus abgefallen ist. In Höhe der Stelle 16 mündet eine Rückführleitung 17 in den Abscheidebehälter 13, die dessen Inneres mit dem Pumpenraum 4 verbindet.

Ein Absperrventil 15 in einer in den Abscheidebehälter 13 oberhalb der Füllstandshöhe einmündenden Leitung kann aufgrund des Signales des Füllstandssensors 14 geöffnet werden, wenn die Menge des abgeschiedenen Gases im Abscheidebehälter 13 einen Wert überschreitet, der zu einer Verringerung der Füllstandshöhe unter den unteren Grenzwert 16 führen würde.

Auf diese Weise ist gewährleistet, dass die Füllstandshöhe an Flüssigkeit in jedem Fall oberhalb der Einmündungsstelle 16 der Rückführleitung 17 liegt, so dass im Abscheidebehälter 13 angesammelte Flüssigkeit zurück in den Pumpenraum 4 geführt werden kann, ohne dass dabei abgeschiedenes Gas in die Rückführleitung 17 gelangen kann.

Im allgemeinen erfolgt die Rückführung der Flüssigkeit in den Pumpenraum 4 druckseitig des Pumpenlaufrades 3, wie dies durch den durch ausgezogene Linien gezeigten Verlauf der Rückführleitung 17 angedeutet ist. Wenn erwünscht, könnte die Rückführung auch ansaugseitig des Pumpenlaufrades 3 erfolgen, wie dies durch die gestrichelte Rückführleitung 20 angedeutet ist, die in einen Bereich 21 ansaugseitig des Pumpenlaufrades 3 in den Pumpenraum 4 einmündet. Die in der Rückführleitung 20 entstehende Saugwirkung, die sich über den Abscheidebehälter 13 auf die Auffangkammer 10 auswirkt, unterstützt die Wirkung der Sekundärpumpeinrichtung 18. Ggf. kann die Saugwirkung auch alleine ausreichen, um eine Strömung der abzudichtenden Flüssigkeit in Richtung auf die Auffangkammer 10 zu bewirken, so dass auf eine Sekundärpumpeinrichtung 18 verzichtet werden kann.

Die Sekundärpumpeinrichtung 18 der vorbeschriebenen Ausführungsform umfasst nur ein einzelnes scheibenförmiges in einer nutförmigen Ausnehmung rotierendes Pumpelement 19. Anstelle davon könnten auch mehrere hintereinander geschaltete Pumpelemente mit entsprechenden nutförmigen Ausnehmungen im Pumpengehäuse 2 vorgesehen sein. Anstelle eines scheibenförmigen Pumpelementes könnte auch eine andere Anordnung z.B. ein Flügelrad, Fördergewinde oder dgl. verwendet werden. Ferner könnte der mit der abzudichtenden Flüssigkeit bis zu einer bestimmten Füllstandshöhe gefüllte Abscheidebehälter durch einen Zyklonabscheider ersetzt werden, um eine verbesserte Abscheidung der Gasleckage aus dem aus der Auffangkammer abgeführten Gemisch aus Gasleckage und Flüssigkeit zu erhalten. Die die Gasleckage aufnehmende Auffangkammer kann eine umfänglich durchgehende oder unterbrochene ringnutartigen Ausbildung haben. Anstelle einer einzigen Auffangkammer könnten auch zwei oder mehrere Auffangkammern axial nebeneinder angeordnet sein. Auch könnte die Auffangkammer durch eine Vielzahl umfänglich verteilter Kavitäten im Pumpengehäuse gebildet sein, die jeweils mit einer Ableitung für das angesammelte Leckagegas zu versehen wären.

## Patentansprüche

1. Dichtungsanordnung zur Abdichtung einer Welle gegenüber einem eine abzudichtende Flüssigkeit enthaltenden Gehäuse, mit einer durch ein Sperrgas an einer von der Flüssigkeit abgewandten Gasseite beaufschlagten Dichtung (7), und einer an der der Flüssigkeit zugewandten Seite der Dichtung angeordneten Sekundärpumpeinrichtung, dadurch gekennzeichnet, dass die Dichtung eine das Sperrgas gegenüber dem Gehäuseinneren abdichtende Gleitringdichtung (7) ist, der seitens der abzudichtenden Flüssigkeit eine die Welle umgebende Auffangkammer (10) zur Aufnahme einer an die der Flüssigkeitsseite der Gleitringdichtung gelangten Leckage des Sperrgases vorgeschaltet ist, und dass die Sekundärpumpeinrichtung (18,19) zum Pumpen einer Menge an Flüssigkeit aus dem Gehäuse in Richtung auf die Auffangkammer ausgelegt ist.

2. Dichtungsanordnung nach Anspruch 1, dadurch gekennzeichnet, dadurch gekennzeichnet, dass die Auffangkammer (10) wenigstens eine die Welle umgebende Ringnut umfasst.

3. Dichtungsanordnung nach Anspruch 1 oder 2, dadurch gekennzeichnet, dass die Auffangkammer (10) mit einem externen Abscheidegefäss (13) zur Aufnahme des in der Auffangkammer angesammelten Gas/Flüssigkeitsgemisches und zu dessen Trennung in die Gas- und Flüssigphasen verbunden ist.

4. Dichtungsanordnung nach Anspruch 3, gekennzeichnet durch eine mit dem Abscheidegefäss (13) verbundene Rückführleitung (17,20) zur Rückführung der im Abscheidegefäss (13) abgeschiedenen Flüssigphase ins Innere des Gehäuses.

5. Dichtungsanordnung nach Anspruch 4, zur Abdichtung der Antriebswelle einer Kreiselpumpe, dadurch gekennzeichnet, dass die Rückführleitung (20) mit der Ansaugseite der Kreiselpumpe verbunden ist.

6. Dichtungsanordnung nach Anspruch 4, dadurch gekennzeichnet, dass das Abscheidegefäss (13) als Zyklonabscheider ausgebildet ist.

## Claims

1. A seal arrangement for sealing a shaft with respect to a housing containing a liquid to be sealed, comprising a seal (7) exposed to a buffer gas on a gas side thereof remote from the liquid, and a secondary pumping means disposed on a side of the seal facing the liquid, characterized in that said seal is a face seal (7) for sealing the buffer gas with respect the interior of the housing, a collecting chamber (10) surrounding the shaft being disposed at the side of the face seal facing the liqid to be sealed for receiving a leakage of the buffer gas having reached the liquid side, and that said secondary pumping means (18,19) is designed for pumping a quantity of the liquid within the housing in a direction towards said collecting chamber.

2. The seal arrangement as set forth in claim 1, characterized in that said collecting chamber (10) comprises at least a single annular groove surrounding said shaft.

3. The seal arrangement as set forth in claim 1 or 2, characterized in that said collecting chamber (10) is connected to an external separating vessel (13) for receiving a gas/liquid mixture collected in said collecting chamber and for separating it into a flow phase and a gas phase.

4. The seal arrangement as set forth in claim 3, characterized by a return conduit (17,20) connected to said separating vessel (13) for returning the liquid phase separated from the gas phase into the interior of the housing.

5. The seal arrangement as set forth in claim 4 for sealing the drive shaft of a centrifugal pump, characterized in that said return conduit (20) is connected to a suction side of said centrifugal pump.

6. The seal arrangement as set forth in claim 4, characterized in that said separating vessel (13) is formed as a cyclone separator.

## Revendications

1. Dispositif d'étanchéité pour réaliser l'étanchéité entre un arbre et un boîtier contenant un liquide à isoler hermétiquement, avec une étanchéité (7) alimentée par un gaz d'arrêt à un côté du gaz opposé au liquide, et un dispositif de pompe secondaire disposé du côté du liquide de l'étanchéité, caractérisé en ce que l'étanchéité est une étanchéité à anneau glissant (7) étanchant le gaz d'arrêt par rapport à l'intérieur du boîtier qui, du côté du liquide à isoler, est monté avant une chambre de réception (10) entourant l'arbre pour recevoir une fuite du gaz d'arrêt parvenue du côté du liquide de l'étanchéité à anneau glissant et en ce que le dispositif de pompe secondaire (18, 19) est étudié pour pomper une quantité de liquide du boîtier dans la direction sur la chambre de réception.

2. Dispositif d'étanchéité selon la revendication 1, caractérisé en ce que la chambre de réception (10) comprend au moins une rainure annulaire entourant l'arbre.

3. Dispositif d'étanchéité selon la revendication 1 ou 2, caractérisé en ce que la chambre de réception (10) est reliée à un réservoir de séparation externe (13) pour recevoir le mélange de liquide / de gaz accumulé dans la chambre de réception et pour le séparer en phases gazeuse et liquide.

4. Dispositif d'étanchéité selon la revendication 3, caractérisé par une conduite de renvoi (17, 20) reliée au réservoir de séparation (13) pour renvoyer la phase liquide séparée dans le réservoir de séparation (13) dans l'intérieur du boîtier.

5. Dispositif d'étanchéité selon la revendication 4, pour l'étanchéité de l'arbre moteur d'une pompe centrifuge, caractérisé en ce que la conduite de renvoi (20), est reliée au côté d'aspiration de la pompe centrifuge.

6. Dispositif d'étanchéité selon la revendication 4, caractérisé en ce que le réservoir de séparation (13) est un séparateur à cyclone.
